# EUROPÄISCHE PATENTANMELDUNG

(11) **EP 0 551 114 A1**
(43) Veröffentlichungstag der Anmeldung: **14.07.1993**
(21) Anmeldenummer: 93100168.9
(22) Anmeldetag: 08.01.1993
(51) Int. Cl.: H04L 12/42, H04L 12/10, H04L 29/14

(54) **Anordnung zur Informationsübermittlung**

(30) Priorität: 09.01.1992 DE 4200326
(71) Anmelder: STN Systemtechnik Nord GmbH, D-28012 Bremen (DE)
(72) Erfinder: Prendel, Peter STN Systemtechnik Nord GmbH, Abt. E, W-2800 Bremen 1 (DE); Siefken-Herrlich, Frank, W-2900 Oldenbrug (DE); Enneking, Andreas, W-2807 Delmenhorst (DE); Schipper, Klaus, W-2904 Kirchhatten (DE); Grobecker, Helmut, W-2805 Stuhr II (DE)
(74) Vertreter: Eisenführ, Speiser & Partner

(57) **Zusammenfassung**

Die Erfindung betrifft eine Anordnung zur Informationsübermittlung zwischen einer Vielzahl von Basisstationen (1), die in einer Schleife oder Kette hintereinander angeordnet sind, und mindestens einer Kopfstation (2,3). Gemäß der Erfindung sind die Energieversorgungsleitungen (6c) der Übertragungswege über zwei Anschlußseiten der Basisstationen jeweils abtrennbar mit den Energieverbrauchern der Basisstationen verbunden, werden im Falle von Kurzschlüssen oder Unterbrechungen geprüft, und die Energieversorgungsleitung der gestörten Anschlußseite wird freigeschaltet und von der anderen Anschlußseite übernommen.

## Beschreibung

Die Erfindung betrifft eine Anordnung zur Informationsübermittlung, insbesondere in schwer zugänglichen Regionen wie im Unterwasserbereich, zwischen einer Vielzahl von Sensoren und/oder Aktuatoren aufweisenden Basisstationen mit jeweils zwei Anschlußseiten, die in einer Schleife oder Kette hintereinander angeordnet sind, und mindestens einer Kopfstation mit zwei Anschlußseiten in der Schleife bzw. zwei Kopfstationen mit jeweils einer Anschlußseite an den Enden der Kette, wobei die Basisstationen und Kopfstationen über dazwischen angeordnete Übertragungswege mit zwei in entgegengesetzten Richtungen übertragenden Informationskanälen miteinander gekoppelt sind; bei der in den Basisstationen über durch eine lokale Steuereinheit gesteuerte Schnittstellen Informationen von den Sensoren übernommen oder auf die Aktuatoren übertragen werden; bei der über die Kopfstationen die Informationen aus den Basisstationen eingesammelt und zur Verarbeitung weitergeleitet bzw. entsprechende Informationen an die Basisstationen übertragen werden; und bei der die Energieversorgung der Basisstationen von den Kopfstationen aus über entsprechende Energieversorgungsleitungen in den Übertragungswegen erfolgt.

Anordnungen dieser Art werden beispielsweise im Bereich von Unterwasseranwendungen verwendet, um Meßaufgaben (mit entsprechenden Sensoren) zu lösen oder um im Unterwasserbereich angeordnete Arbeitseinrichtungen (Aktuatoren) zu betreiben. Aufgrund der rauhen Betriebsbedingungen und der schweren Zugänglichkeit der Baueinheiten solcher Anordnungen einschließlich der Übertragungswege z.B. in Form von Kabeln ist es in der Regel erforderlich, solche Anordnungen konstruktiv stabil und belastungsfähig auszubilden. Aufgrund dieser Konstruktion und einer oft in großen Tiefen erfolgenden Installation ist bereits bei geringen auftretenden Fehlern zu befürchten, daß ein Gesamtausfall des Systems die Folge ist. Eine Aufrechterhaltung der Betriebsfähigkeit kann deshalb nur mit einem extrem hohen Einsatz an Personal, Material und Zeit erfolgen.

Es ist deshalb bereits bekannt, die Basisstationen in einer Kette oder geschlossenen schleife hintereinander anzuordnen und jeweils zwei Informationsübertragungskanäle vorzusehen, die in entgegengesetzten Richtungen verlaufen. Bei einer Unterbrechung eines oder beider Informationskanäle kann dann die Übertragungsrichtung umgekehrt werden, um auf diese Weise die Informationen an eine andere als die zunächst vorgesehene Kopfstation (bei einer Kettenanordnung) oder in anderer Richtung an die Kopfstation (in einer Schleife) zu übertragen. Ein solches System ist z.B. in der US-PS 4,109,821 beschrieben.

Der vorliegenden Erfindung liegt die Aufgabe zugrunde, eine Anordnung der einleitend genannten Art derart zu verbessern, daß bei einem Auftreten von Fehlfunktionen im Übertragungsweg oder an den Kopfstationen durch entsprechende Betriebsänderung solche Ausfälle kompensiert werden oder zumindest eine Teilbetriebsfähigkeit erhalten bleibt.

Diese Aufgabe wird gemäß der vorliegenden Erfindung dadurch gelöst, daß die Energieversorgungsleitungen der Übertragungswege über die beiden Anschlußseiten der Basisstationen jeweils abtrennbar mit den Energieverbrauchern in den Basisstationen verbunden sind und daß im Falle von Kurzschlüssen oder Unterbrechungen der Zustand der beiden Anschlußseiten geprüft und die Energieversorgungsleitung der gestörten Anschlußseite freigeschaltet und die Energieversorgung von der anderen Anschlußseite übernommen wird.

Durch die Reihenschaltung der Basisstationen wird bei einer fehlerfreien Betriebsweise eine hohe Informationsübertragungsgeschwindigkeit gewährleistet. Es kann jeweils eine Informationsübertragung in einer Informationsflußrichtung erfolgen, und bei einer geeigneten Kodierung kann die jeweils angesprochene Basisstation die für sie bestimmten Informationen aufnehmen oder für andere Basisstationen bzw. für die Kopfstationen bestimmte Informationen weiterleiten. Nicht für die betreffende Basisstation vorgesehene Informationen werden hingegen an die nachfolgende Basisstation übergeben. Zur Koordinierung des Betriebes der Basisstationen sowie zur Energieversorgung der Basisstationen sind die Kopfstationen vorgesehen. Über geeignete Kontrolloperationen bei der Informationsübertragung, beispielsweise durch zusätzliche Übertragung geeigneter Kontrollsequenzen, und durch Prüfung der Energieversorgungsanschlüsse ist es möglich, über die Kopfstationen oder in den Basisstationen festzustellen, ob Fehler im Bereich der Informationsübertragung oder Energieversorgung aufgetreten sind und im Bereich welcher der Basisstationen der Fehler zu lokalisieren ist. Darüber hinaus ist es möglich, Aufschlüsse über ggf. vorliegende Unterbrechungen im Bereich von Informationsleitungen bzw. Unterbrechungen und Kurzschlüssen in den Energieversorgungsleitungen zu gewinnen. Die Überprüfung erfolgt im Bereich der Kopfstationen oder Basisstationen mit Hilfe von entsprechenden Prozessoren oder Analysatoren. Bei der Feststellung von Fehlfunktionen können über Schalteinheiten Umsteuerungen vorgenommen werden, die entweder dazu führen, daß durch Redundanzeffekte eine Fehlerkompensation erfolgt, oder daß zumindest die Auswirkung der Fehlfunktion lokal begrenzt bleibt und keinen Ausfall des Gesamtsystems zur Folge hat. Die Bereitstellung der Redundanz im Bereich der Energieversorgung erfolgt dadurch, daß zur Speisung der Basisstationen mit Energie eine gesonderte Energieversorgungsleitung vorgesehen ist, in die Energie wahlweise von den Kopfstationen einspeisbar ist. Eine lokale Unterbrechung der Energieversorgung kann somit ohne Auswirkungen nach außen kompensiert werden.

Eine vorteilhafte Ausführungsform ist dadurch gekennzeichnet, daß die Energieversorgungsleitungen über die beiden Anschlußseiten der Basisstationen jeweils über Trennschalter abtrennbar mit den Energieverbrauchern in den Basisstationen verbunden sind und daß der Zustand der beiden Anschlußseiten durch eine Prüfeinrichtung geprüft und die Freischaltung der gestörten Anschlußseite durch Betätigen des zugeordneten Trennschalters erfolgt.

Die Informationskanäle des Übertragungsweges bestehen vorzugsweise aus Lichtwellenleitern, um eine hohe Übertragungskapazität bereitzustellen. Dies ist insbesondere bei große Informationsmengen abgebenden Sensoren wichtig. Die Übertragungswege enthalten neben den Informationskanälen und getrennten Energieversorgungsleitungen vorzugsweise noch elektrisch leitende Hilfsleitungen für Hilfsfunktionen. Bei Kurzschlüssen oder Unterbrechungen in den Hilfsleitungen kann dann durch eine Prüfeinrichtung eine ähnliche Prüfung und Freischaltung durch entsprechende Trennschalter wie bei den Energieversorgungsleitungen erfolgen.

Die Hilfsleitungen im Übertragungsweg können vorzugsweise die Prüfeinrichtungen zur Überprüfung der Energieversorgung in den Basisstationen für die Zeit der Prüfung mit Hilfsenergie versorgen. Eine andere Lösung kann darin bestehen, daß in jeder Basisstation eine Stützenergiequelle für die Prüfeinrichtung vorgesehen ist, so daß aus dieser die entsprechende Energie zur Prüfung des Zustandes der Stromversorgung herangezogen werden kann.

Zur Realisierung einer umschaltbaren bidirektionalen Datenübertragung wird vorgeschlagen, in jeder Basisstation eine Umschalteinrichtung zur Ermöglichung eines bidirektionalen Informationsverkehrs in zwei Richtungen vorzusehen, die zwei Sender, zwei Empfänger und zwei Schnittstellen aufweist, die jeweils zwischen den Basisstationen angeordnete Informationskanäle beaufschlagen. Hierbei ist jeweils einer der Empfänger und einer der Sender mit jeweils einer Schnittstelle verbunden, deren Funktion von einer Steuereinheit in der Basiseinheit koordiniert ist.

Die in den Basisstationen vorgesehenen Sensoren und/oder Aktuatoren sind zur Abgabe oder zum Empfang von Informationen über eine Schnittstelle angeschlossen, die durch die lokale Steuereinheit gesteuert wird.

In jeder Basisstation ist vorzugsweise ein Prozessor vorgesehen, der die von der benachbarten Basisstation übertragenen Informationen prüft und beim Vorliegen von Störungen die Informationsübertragungsrichtung in die entgegengesetzte Richtung schaltet. Dieses Umschalten der Informationsübertragungsrichtung kann auch ausgelöst durch eine Überprüfung der Energieversorgung erfolgen. Bei dieser Lösung wird also die Informationsübertragungsrichtung bei Störungen von den jeweiligen Basisstationen aus dezentral geschaltet.

Eine andere Lösung, bei der die Informationsübertragungsrichtungen zentral umgeschaltet werden, kann daraus bestehen, daß die Kopfstation bzw. die Kopfstationen einen Prozessor aufweisen, der zentral die von den einzelnen Basisstationen übertragenen Informationen überprüft und beim Vorliegen von Störungen die Informationsübertragungsrichtungen in den an der Störungsstelle liegenden Basisstationen umkehrt.

Die Erfindung wird nachfolgend anhand von Ausführungsbeispielen unter Bezug auf die beigefügten Zeichnungen näher erläutert.

Es zeigen:
- Figur 1: ein Blockschaltbild einer Reihenschaltung von Basisstationen mit im Bereich der Enden der Reihenschaltung angeordneten Kopfstationen;
- Figur 2: ein Prinzipschaltbild des Aufbaus einer Basisstation;
- Figur 3: ein Blockschaltbild zur Erläuterung der Funktionen im Bereich einer Umschalteinheit der Basisstationen;
- Figur 4: ein Blockschaltbild zur Veranschaulichung des Informationsflusses bei einem Auftreten einer Unterbrechung der Informationskanäle zwischen zwei Basisstationen;
- Figur 5: ein Blockschaltbild zur Veranschaulichung des Informationsflusses bei zwei Unterbrechungen der Informationskanäle zwischen den Basisstationen;
- Figur 6: ein Blockschaltbild zur Veranschaulichung der Funktionsweise bei einer lokalen Unterbrechung der Energieversorgungsleitungen zwischen zwei Basisstationen;
- Figur 7: ein vereinfachtes Blockschaltbild zur Veranschaulichung des Aufbaus einer Kopfstation; und
- Figur 8: ein detaillierteres Blockschaltbild zur Darstellung einer Kopfstation und einer Basisstation mit Einzelheiten der Umschaltung der Energieversorgung.

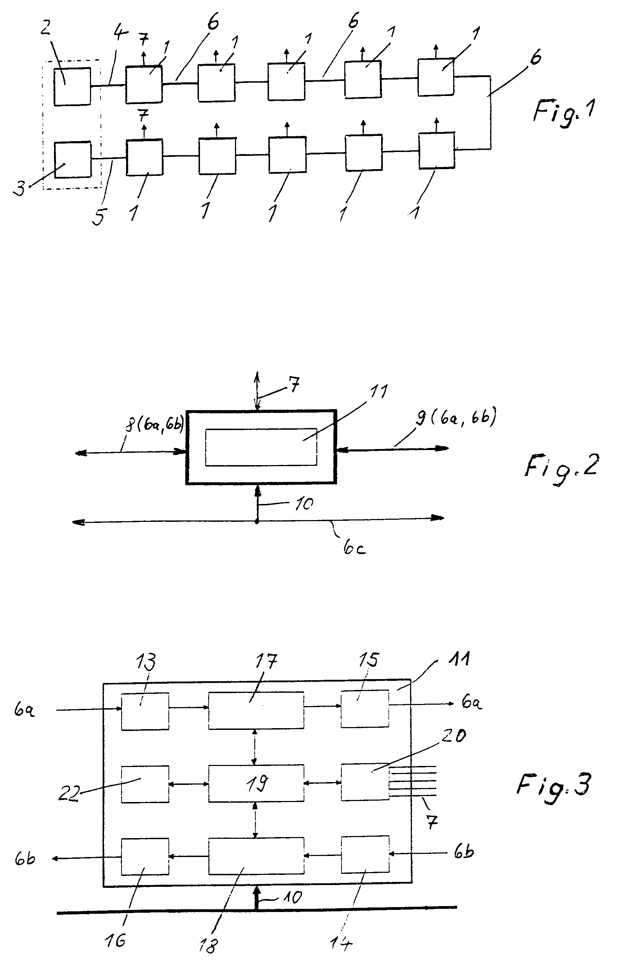

Die Anordnung zur Informationsübermittlung besteht entsprechend der Darstellung nach Figur 1 im wesentlichen aus einer Reihenschaltung von Basisstationen 1 sowie Kopfstationen 2 und 3, die im Bereich von Enden 4 und 5 der Reihenschaltung angeordnet sind. Die Basisstationen 1 sind durch Übertragungswege 6 miteinander und mit den Kopfstationen 2 und 3 verbunden. Im vorliegenden Fall sind die Übertragungswege 6 leitungsgebundene Übertragungswege in Form von Kabeln, die getrennte Kanäle für die Informationsübertragung und für eine Energieübertragung enthalten. Es sind zwei in jeweils in entgegengesetzten Richtungen übertragende Informationskanäle 6a und 6b vorgesehen (Fig. 2) sowie eine Energieübertragungsleitung 6c. Darüber hinaus können auch noch Hilfsleitungen vorgesehen sein, wie später noch erläutert wird. Als Informationsübertragungskanäle 6a, 6b werden wegen der hohen Übertragungskapazität vorzugsweise Lichtwellenleiter verwendet.

Auch wenn in den vorliegenden Ausführungsbeispielen die Basisstationen 1 zu einer Reihenschaltung mit zwei Enden 4, 5 zusammengeschaltet sind, an die zwei Kopfstationen 2, 3 angeschlossen sind, so ist es jedoch auch möglich, die Reihenschaltung der Basisstationen 1 zu einer geschlossenen Schleife auszubilden und in diese Schleife eine Kopfstation (mit zwei Anschlußseiten) einzufügen. Dies wird von den räumlichen Gegebenheiten der Installation der Anordnung abhängen.

Die Basisstationen 1 sind zur Verbindung mit Sensoren und/oder Aktuatoren ausgebildet, und zu diesem Zwecke weisen die Basisstationen 1 entsprechende Anschlüsse 7 auf. Aus der Darstellung in Figur 2 ist darüber hinaus ersichtlich, daß zur Ermöglichung einer bidirektionalen Datenübertragung Informationsanschlüsse 8 und 9, bestehend aus den beiden Informationskanälen 6a, 6b sowie zur Speisung mit Versorgungsenergie ein Energieanschluß 10 vorgesehen sind. Zur Koordinierung des Betriebes, insbesondere für Informationsübertragungen, ist eine Umschalteinrichtung 11 vorgesehen. Der Energieanschluß 10 ist mit einer gemeinsamen Energieversorgungsleitung 6c im Übertragungsweg 6 verbunden, die von beiden Kopfstationen 2 und 3 speisbar ist.

Der Aufbau der Umschalteinrichtung 11 ist in Figur 3 veranschaulicht. Über Empfänger 13 und 14 ist eine Aufnahme von Informationen möglich, die über die Informationsanschlüsse 8 und 9 übertragen werden. Die Aussendung von Informationen erfolgt mit Hilfe von Sendern 15 und 16. Jeweils ein Empfänger 13 bzw. 14 und ein Sender 15 bzw. 16 sind an eine Schnittstelle 17 bzw. 18 angeschlossen, die eine Übertragung von Informationen sowohl unmittelbar vom Empfänger 13, 14 zum Sender 15, 16 erlaubt, als auch eine Informationsübertragung im Bereich einer Steuereinheit 19 zuläßt. Die Funktion der Schnittstelle 17, 18 wird von der Steuereinheit 19 eingestellt. Die Steuereinheit 19 ist über eine Schnittstelle 20 mit den Anschlüssen 7 der Sensoren bzw. Aktuatoren verbunden. Die Anschlüsse 7 ermöglichen eine Einspeisung von Steuer- bzw. Meßinformationen. Insbesondere ist es möglich, über die Anschlüsse 7 Sensorinformationen aufzunehmen. Zur Koordinierung des Betriebes der Umschalteinrichtung 11 ist ein mit der Steuereinheit verbundener Prozessor 22 vorgesehen.

Ein vorgesehener Betrieb kann beispielsweise so realisiert werden, daß eine Energieversorgung der Basisstationen 1 mit Hilfe der Kopfstation 2 erfolgt. Gleichfalls ist es möglich, erforderliche Steuersignale für die Basisstationen 1 im Bereich der Kopfstation 2 zu generieren. Eine Übermittlung der von den Basisstationen 1 erfaßten Informationen kann in Richtung auf die Kopfstation 3 erfolgen. In entsprechender Weise kann eine Übertragung von Informationen aus der jeweiligen Kopfstation 2 oder 3 an die entsprechenden Basisstationen 1 erfolgen, um Aktuatoren anzusteuern.

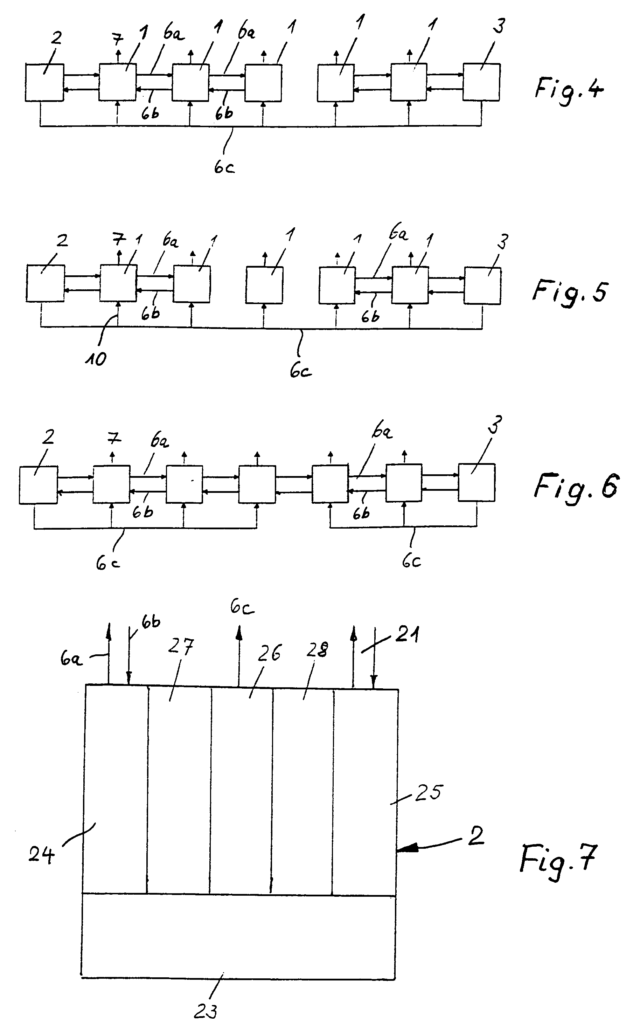

Bei einem Auftreten eines Fehlers, beispielsweise bei einer in Figur 4 dargestellten Unterbrechung der Informationskanäle 6a, 6b zwischen zwei Basisstationen 1 an einer Stelle, erfolgt über die Kopfstation 2, 3 eine Umschaltung der der Unterbrechung benachbarten Basisstationen 1. Die Übertragung der von den Basisstationen 1 erfaßten Informationen erfolgt dadurch bei den ausgehend von der Unterbrechungsstelle der Kopfstation 2 zugewandten Basisstationen 1 in Richtung auf die Kopfstation 2 und bei den jenseits der Unterbrechungsstelle liegenden Basisstationen 1 in Richtung auf die Kopfstation 3. Hierdurch wird gewährleistet, daß diese Unterbrechung der Informationskanäle 6a, 6b des Übertragungsweges 6 durch implementierte Redundanz ohne Auswirkungen bleibt.

Bei einer in Figur 5 dargestellten Unterbrechung der Informationskanäle 6a, 6b an zwei oder mehreren Stellen ist es zumindest möglich, durch eine geeignete Umschaltung der Informationsflußrichtungen die weiterhin über intakte Informationskanäle 6a, 6b mit den jeweiligen Kopfstationen 2, 3 verbundenen Basisstationen 1 in funktionsgerechter Weise zu betreiben und Informationsverluste der ungestörten Basisstationen zu vermeiden. Lediglich von Unterbrechungen der Informationskanäle 6a, 6b eingeschlossene Basisstationen 1 können nicht mehr am Informationsaustausch teilhaben. Grundsätzlich wäre es auch möglich, zur Reduzierung der Auswirkungen eines derartigen Störfalles zusätzliche Übertragungswege anderer Art bereitzustellen, die beispielsweise nicht leitungsgebunden sind. Insbesondere bei Anwendungen unter Wasser können hierbei jedoch nur vergleichsweise geringe Informationsübertragungsraten realisiert werden, so daß nur eine eingeschränkte Funktion möglich ist.

Bei einer in Figur 6 dargestellten Unterbrechung im Bereich der Energieversorgungsleitung 6c an einer Stelle erfolgt eine Energieversorgung der Basisstationen 1 auf einer Seite der Unterbrechungsstelle durch die eine Kopfstation 2 und eine Versorgung der Basisstationen 1 auf der anderen Seite der Unterbrechungsstelle durch die andere Kopfstation 3. Hierdurch bleibt eine derartige Unterbrechung ohne Auswirkungen. Bei Defekten in der Energieversorgung im Bereich der Basisstationen 1 selber, insbesondere bei Kurzschlüssen, ist es möglich, diese abzuschalten, so daß die entsprechenden Auswirkungen lokal begrenzt bleiben und nicht zu einem Ausfall der Gesamtanordnung führen können.

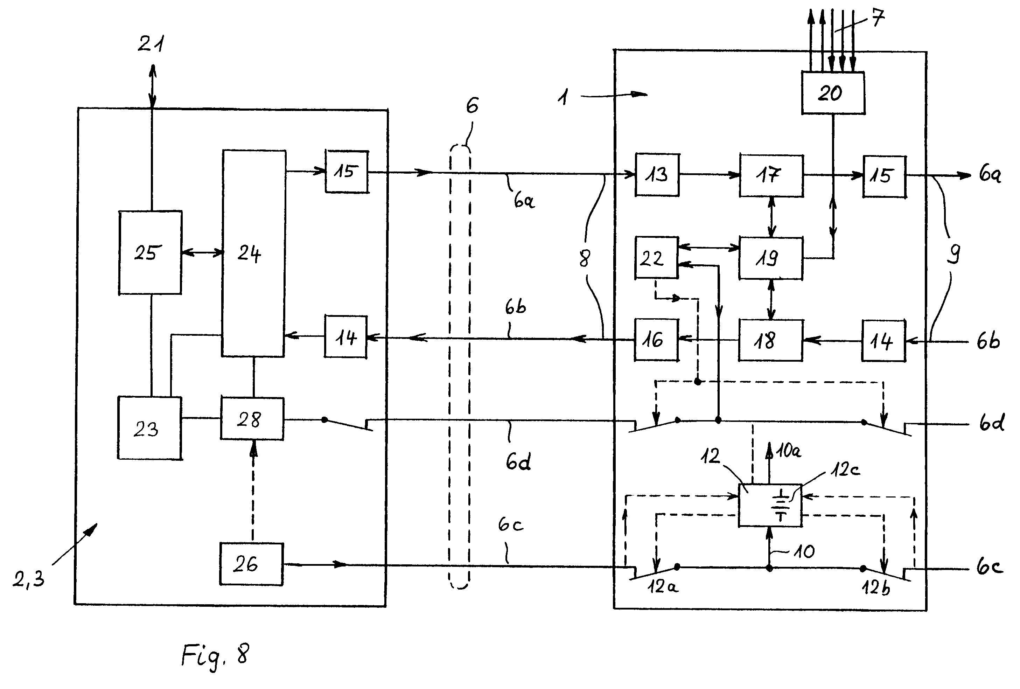

Eine Blockschaltbilddarstellung der Kopfstationen 2, 3 ist in Figur 7 angegeben. Es ist hieraus ersichtlich, daß die Kopfstationen 2, 3 jeweils eine Steuereinheit 23 enthalten, die eine Basisschnittstelle 24 zur bidirektionalen Informationsübertragung mit einer zugeordneten Basisstation 1 sowie eine Kommunikationsschnittstelle 25 zur Ermöglichung eines Informationsverkehrs mit externen Schnittstellen oder Auswerteeinrichtungen, beispielsweise mit Schnittstellen im Bereich einer an Bord von Schiffen oder an Land angeordneten Steuerwarte, aufweist. Darüber hinaus ist eine Energieversorgung 26 zur Speisung der Energieleitung 6c, ein Prozessor 27 zur Überprüfung der Fehlerfreiheit des Informationsverkehrs sowie eine Schalteinheit 28 zur Auslösung von Funktionsänderungen im Bereich der Basisstationen 1 bei einem Auftreten von Fehlern vorgesehen.

Figur 8 zeigt nun weitere Details der Kopfstation 2, 3 und der Basisstationen 1. Zunächst ist zu sehen, daß beide durch einen Übertragungsweg 6 miteinander gekoppelt sind, der vorzugsweise in Form eines einzigen Kabels ausgebildet ist und zwei Informationskanäle 6a und 6b für entgegengesetzte Übertragungsrichtungen, eine Energieversorgungsleitung 6c und ggf. Hilfsleitungen 6d aufweist.

Die Basisstation 1, die stellvertretend für die weiteren Basisstationen 1 in einer Kette oder Schleife angeordnet steht, weist neben den in Figur 3 bereits dargestellten Einheiten 13 bis 20 sowie 22 der Umschalteinrichtung 11 noch die Details der bereits angedeuteten Energieversorgung und Hilfsleitungen auf. Die von beiden Anschlußseiten der Basiseinheit 1 kommenden Energieversorgungsleitungen 6c sind über Trennschalter 12a und 12b mit dem Energieanschluß 10 verbunden, und von diesem Energieanschluß 10 wird über eine Prüfeinrichtung 12 Energie über einen Energieanschluß 10a zur Versorgung der einzelnen Einheiten in der Basisstation 1 bereitgestellt.

Die Prüfeinrichtung 12 prüft insbesondere bei auftretenden Störungen den Zustand der Energieversorgungsleitung 6c an den beiden Anschlußseiten der Basisstation 1 (gestrichelte Verbindung zu den Energieversorgungsleitungen 6c). Sind beide Anschlußseiten in Ordnung, so wird die Energie vom Energieanschluß 10 zum Energieanschluß 10a durchgeschaltet und die beiden Trennschalter 12a und 12b bleiben im geschlossenen Zustand. Wird jedoch ein Unregelmäßigkeit festgestellt, die z.B. durch einen Kurzschluß oder durch eine Unterbrechung entstanden ist, so prüft die Prüfeinrichtung 12 beide Anschlußseiten nacheinander auf einwandfreie Funktion und trennt durch Betätigen des entsprechenden Trennschalters 12a bzw. 12b die defekte Seite ab. Hierdurch wird eine Beeinträchtigung der auf der einwandfreien Anschlußseite liegenden Basisstationen 1 durch einen Kurzschluß verhindert, und die Speisung der jeweiligen Basiseinheit 1 erfolgt von der fehlerlosen Anschlußseite.

Damit die Prüfeinrichtung 12 auch bei Ausbleiben von Versorgungsenergie am Energieanschluß 10 zur Energieversorgungsleitung 6c diese Prüfung vornehmen kann, gibt es zwei Möglichkeiten. Eine erste Möglichkeit besteht darin, Hilfsenergie bzw. Stützenergie über die Hilfsleitungen 6d zuzuführen. Eine andere Möglichkeit ist in Figur 8 durch eine Stützenergiequelle 12c angedeutet, die z.B. aus einer Primär- oder Sekundärbatterie bestehen kann. In diesem Fall sind die Hilfsleitungen 6d für diesen Prüfvorgang nicht erforderlich. Die Hilfsleitungen 6d können jedoch auch für andere Funktionen herangezogen werden, z.B. für eine zentrale Steuerung durch die Kopfstationen 2, 3 oder zur Signalisierung von bestimmten Zuständen an diese.

Ähnlich wie die Prüfung und Freischaltung der gestörten Anschlußseite durch die Prüfeinrichtung 12 und die Trennschalter 12a, 12b für die Energieversorgung erfolgt, kann eine entsprechende Prüfung und Freischaltung der Hilfsleitungen 6d auf geeignete Weise erfolgen, indem die eingezeichneten Trennschalter durch den Prozessor 22 gesteuert werden.

Die in Figur 8 dargestellte Kopfstation 2, 3 ist auf ihrer Anschlußseite zum Übertragungsweg 6 ähnlich wie jede der Anschlußseiten der Basisstationen 1 ausgebildet. Die Informationskanäle 6a und 6b stehen über einen Sender 15 und einen Empfänger 14 sowie über die bereits früher erwähnte Basisschnittstelle 24 und eine Kommunikationsschnittstelle 25 mit einem externen Anschluß 21 in Verbindung. Darüber hinaus erfolgt über die Schalteinheit 28 eine Kommunikation, vorzugsweise über einen Trennschalter, mit den Hilfsleitungen 6d zu den einzelnen Basiseinheiten 1, wobei von der Energieversorgung 26 ggf. Hilfsenergie (gestrichelte Leitung) zur Verfügung gestellt wird. Die Steuereinheit 23 übernimmt im vorliegenden Fall auch die Funktion des Prozessors 27 nach Figur 7, insbesondere bei einer zentralen Überwachung der Übertragungsfunktionen in den Kopfstationen 2, 3 die Fehlerfreiheit der von den Basisstationen 1 übertragenen Informationen.

## Patentansprüche

1. Anordnung zur Informationsübermittlung, insbesondere in schwer zugänglichen Regionen wie im Unterwasserbereich, zwischen einer Vielzahl von Sensoren und/oder Aktuatoren aufweisenden Basisstationen (1) mit jeweils zwei Anschlußseiten, die in einer Schleife oder Kette hintereinander angeordnet sind, und mindestens einer Kopfstation (2) mit zwei Anschlußseiten in der Schleife bzw. zwei Kopfstationen (2, 3) mit jeweils einer Anschlußseite an den Enden der Kette, wobei die Basisstationen (1) und Kopfstationen (2, 3) über dazwischen angeordnete Übertragungswege (6) mit zwei in entgegengesetzten Richtungen übertragenden Informationskanälen (6a, 6b) miteinander gekoppelt sind;
bei der in den Basisstationen (1) über durch eine lokale Steuereinheit (19) gesteuerte Schnittstellen (17, 18, 20) Informationen von den Sensoren übernommen oder auf die Aktuatoren übertragen werden;
bei der über die Kopfstationen (2, 3) die Informationen aus den Basisstationen (1) eingesammelt und zur Verarbeitung weitergeleitet bzw. entsprechende Informationen an die Basisstationen (1) übertragen werden; und
bei der die Energieversorgung der Basisstationen (1) von den Kopfstationen (2, 3) aus über entsprechende Energieversorgungsleitungen (6c) in den Übertragungswegen (6) erfolgt;
dadurch gekennzeichnet, daß
die Energieversorgungsleitungen (6c) der Übertragungswege (6) über die beiden Anschlußseiten der Basisstationen (1) jeweils abtrennbar mit den Energieverbrauchern in den Basisstationen (1) verbunden sind und daß im Falle von Kurzschlüssen oder Unterbrechungen der Zustand der beiden Anschlußseiten geprüft und die Energieversorgungsleitung (6c) der gestörten Anschlußseite freigeschaltet und die Energieversorgung von der anderen Anschlußseite übernommen wird.

2. Anordnung nach Anspruch 1,
dadurch gekennzeichnet, daß die Energieversorgungsleitungen (6c) über die beiden Anschlußseiten der Basisstationen (1) jeweils über Trennschalter (12a, 12b) abtrennbar mit den Energieverbrauchern in den Basisstationen (1) verbunden sind und daß der Zustand der beiden Anschlußseiten durch eine Prüfeinrichtung (12) geprüft und die Freischaltung der gestörten Anschlußseite durch Betätigen des zugeordneten Trennschalters (12a, 12b) erfolgt.

3. Anordnung nach Anspruch 1 oder 2,
dadurch gekennzeichnet, daß die Informationskanäle (6a, 6b) als Lichtwellenleiter ausgebildet sind.

4. Anordnung nach Anspruch 1 oder 2,
dadurch gekennzeichnet, daß die Übertragungswege (6) neben den Informationskanälen (6a, 6b) und den Energieversorgungsleitungen (6c) noch elektrisch leitende Hilfsleitungen (6d) für Hilfsfunktionen aufweisen.

5. Anordnung nach den Ansprüchen 2 und 4,
dadurch gekennzeichnet, daß bei Kurzschlüssen oder Unterbrechungen in den Hilfsleitungen (6d) durch eine Prüfeinrichtung eine ähnliche Prüfung und Freischaltung durch entsprechende Trennschalter wie bei den Energieversorgungsleitungen (6c) erfolgt.

6. Anordnung nach den Ansprüchen 2 und 4,
dadurch gekennzeichnet, daß die Hilfsleitungen (6d) die Prüfeinrichtungen (12) in den Basisstationen (1) mit Hilfsenergie versorgen.

7. Anordnung nach Anspruch 1 oder 2,
dadurch gekennzeichnet, daß in jeder Basisstation (1) eine Stützenergiequelle (12c) für die Prüfeinrichtung (12) vorgesehen ist.

8. Anordnung nach einem der vorstehenden Ansprüche,
dadurch gekennzeichnet, daß in jeder Basisstation (1) eine Umschalteinrichtung (11) zur Ermöglichung eines bidirektionalen Informationsverkehrs in zwei Richtungen vorgesehen ist, die zwei Sender (15, 16), zwei Empfänger (13, 14) und zwei Schnittstellen (17, 18) aufweist, die jeweils zwischen den Basisstationen (1) angeordnete Informationskanäle (6a, 6b) beaufschlagen.

9. Anordnung nach Anspruch 8,
dadurch gekennzeichnet, daß jeweils einer der Empfänger (13, 14) und einer der Sender (15, 16) mit jeweils einer Schnittstelle (17, 18) verbunden ist, deren Funktion von einer Steuereinheit (19) in der Basiseinheit (1) koordiniert ist.

10. Anordnung nach einem der Ansprüche 1 bis 9,
dadurch gekennzeichnet, daß die lokale Steuereinheit (19) über eine Schnittstelle (20) mit Anschlüssen (7) von Sensoren und/oder Aktuatoren verbunden ist.

11. Anordnung nach einem der Ansprüche 1 bis 10,
dadurch gekennzeichnet, daß in jeder Basisstation (1) ein Prozessor (22) vorgesehen ist, der die von der benachbarten Basisstation (1) übertragenen Informationen prüft und beim Vorliegen von Störungen die Informationsübertragungsrichtung in die entgegengesetzte Richtung schaltet.

12. Anordnung nach einem der Ansprüche 1 bis 10,
dadurch gekennzeichnet, daß die Kopfstation(en) (2, 3) einen Prozessor (27) aufweist, der zentral die von den einzelnen Basisstationen (1) übertragenen Informationen überprüft und beim Vorliegen von Störungen die Informationsübertragungsrichtungen in den an der Störungsstelle liegenden Basisstationen (1) umkehrt.
